# EUROPEAN PATENT APPLICATION

(11) **EP 1 830 297 A1**
(43) Date of publication of application: **05.09.2007**
(21) Application number: 07004242.9
(22) Date of filing: 01.03.2007
(51) Int. Cl.: G06F 21/00, H04L 9/00, H04M 1/725

(54) **Portable telephone and program for sending and receiving encrypted electronic mail**

(30) Priority: 02.03.2006 JP 2006056889
(71) Applicant: Aruze Corp., Tokyo 135-0063 (JP)
(72) Inventor: Sudo, Tomo, Tokyo 135-0063 (JP); Yoshida, Shuichiro, Tokyo 135-0063 (JP)
(74) Representative: HOFFMANN EITLE

(57) **Abstract**

A portable telephone comprises a nonvolatile memory, an operation unit, a liquid crystal panel and a microcomputer. The microcomputer is operable to: creat a conversion table upon an input from an owner; receive an encrypted electronic mail; check whether or not a password accepted by the operation unit coincides with the password stored in the nonvolatile memory; decrypt the received encrypted electronic mail with reference to the conversion table to generate a decrypted electronic mail, if the password accepted by the operation unit coincides with the password stored in the nonvolatile memory; store temporarily the decrypted electronic mail; control the display of the decrypted electronic mail temporarily stored in the microcomputer on the liquid crystal panel; and delete the decrypted electronic mail temporarily stored in the microcomputer according to an order for stopping displaying the decrypted electronic mail on the liquid crystal display.

## Description

### BACKGROUND OF THE INVENTION

### 1. Field of the Invention

The present invention relates to a portable telephone that can send and receive an electronic mail and a program for sending and receiving the eletctronic mail.

### 2. Description of the Related Art

Recently, a critical document or a classified document is exchanged by using an electronic mail because of the development of information and communications technology. In this situation, it is important to check a person who sends or receives the electronic mail. Especially, when a person sends the electronic mail to a wrong person, he/she can not delete the sent electronic mail.

There is a mail server that relays an electronic mail sent from a mail client and signs the electronic mail digitally. This mail server is disclosed in Japanese Patent Laid-open Publication No.2001-168902. Further, there is a payroll accounting and payout processing system that executes payroll accounting by sending in-and-out information to a sever by using an encrypted electronic mail at an in-and-out time of each employee. This payroll accounting and payout processing system is disclosed in Japanese Patent Laid-open Publication No.2001-273389.

There is a remote control system that controls a device located at a point distant from a user by using an encrypted electronic mail. This remote control system is disclosed in Japanese Patent Laid-open Publication No.2002-058077. Further, there is a method for multiplexing an electronic mail address that allows a user to access an electronic mail which is sent to the user only when a password input by the user coincides with his/her own password which is previously stored, in a situation that the electronic mail address which is previously stored is shared with a plurality of users. This method is disclosed in Japanese Patent Laid-open Publication No.H11-331242.

These inventions however have the following problems: (1) the first invention has a problem that there is no method for checking whether or not the electronic mail is sent from an authorized person, in a case where a malicious person impersonates the authorized person and sends an electronic mail by using a mail address of the authorized person; (2) the second and third inventions have a problem that a malicious person can know contents of the encrypted electronic mail if the malicious person operates a device (e.g. personal computer) receiving the encrypted electronic mail without permission, because the device automatically decrypts the encrypted electronic mail when receiving the encrypted electronic mail to which an regular mail address is attached; and (3) the fourth invention has a problem that a new specifying field (e.g. a source user specifying field and a destination user specifying field) to which a mail server refers in order to specify a source user and a destination user should be added to the electronic mail because the electronic mail address is shared with the plurality of users.

### SUMMARY OF THE INVENTION

It is an object of the present invention to provide a portable telephone and a program for sending and receiving an electronic mail which are capable of checking whether or not a received electronic mail is sent from an authorized person without adding a new specifying field to the electronic mail, and preventing a malicious person from reading the electronic mail even if the malicious person impersonates the authorized person.

In order to achieve the object, the present invention provides a portable telephone comprising: a conversion table creating program storing means for storing a conversion table creating program; a conversion table creating means for executing the conversion table creating program to creat a conversion table upon an input from a owner; a conversion table storing means for storing the created conversion table; an encrypted electronic mail receiving means for receiving an encrypted electronic mail; an encrypted electronic mail storing means for storing the received encrypted electronic mail; a password storing means for storing a password; a password inputting means for inputting a password; a ckecing means for checking whether or not a password input from the password inputting means coincides with the password stored in the password storing means; a decrypted electronic mail generating means for decrypting the received encrypted electronic mail stored in the encrypted electronic mail storing means, with reference to the conversion table stored in the conversion table storing means, to generate a decrypted electronic mail, if the password input from the password inputting means coincides with the password stored in the password storing means; a decrypted electronic mail temporarily storing means for temporarily storing the decrypted electronic mail generated by the decrypted electronic mail generating means; a display means for displaying the decrypted electronic mail thereon; a display conrol means for controlling the display of the decrypted electronic mail temporarily stored in the decrypted electronic mail temporarily storing means on the display means; and a decrypted electronic mail deleting means for deleting the decrypted electronic mail temporarily stored in the decrypted electronic mail temporarily storing means according to an order for stopping displaying the decrypted electronic mail on the display means.

In order to achieve the object, the present invention provides a portable telephone comprising: a conversion table receiving means for receiving from another portable telephone a conversion table created by executing a conversion table creating program in the another portable telephone; a conversion table storing means for storing the received conversion table; an encrypted electronic mail receiving means for receiving an encrypted electronic mail; an encrypted electronic mail storing means for storing the received encrypted electronic mail; a password storing means for storing a password; a password inputting means for inputting a password; a ckecing means for checking whether or not a password input from the password inputting means coincides with the password stored in the password storing means; a decrypted electronic mail generating means for decrypting the received encrypted electronic mail stored in the encrypted electronic mail storing means, with reference to the conversion table stored in the conversion table storing means, to generate a decrypted electronic mail, if the password input from the password inputting means coincides with the password stored in the password storing means; a decrypted electronic mail temporarily storing means for temporarily storing the decrypted electronic mail generated by the decrypted electronic mail generatingmeans; a displaymeans for displaying the decrypted electronic mail thereon; a display conrol means for controlling the display of the decrypted electronic mail temporarily stored in the decrypted electronic mail temporarily storing means on the display means; and a decrypted electronic mail deleting means for deleting the decrypted electronic mail temporarily stored in the decrypted electronic mail temporarily storing means according to an order for stopping displaying the decrypted electronic mail on the display means.

In order to achieve the object, the present invention provides a portable telephone comprising: a conversion table creating program storing means for storing a conversion table creating program; a conversion table creating means for executing the conversion table creating program to creat a conversion table upon an input from a owner; a conversion table storing means for storing the created conversion table; an electronic mail storing means for storing a created electronic mail; an encrypted electronic mail generating means for encrypting the electronic mail stored in the electronic mail storing means with reference to the conversion table stored in the conversion table storing means, to generate an encrypted electronic mail; an encrypted electronic mail sending means for sending the generated encrypted electronic mail; and a deleting means for deleting the electronic mail corresponding to the encrypted electronic mail from the electronic mail storing means after the encrypted electronic mail sending means sends the encypted electronic mail.

In order to achieve the object, the present invention provides a portable telephone comprising: a conversion table receiving means for receiving from another portable telephone a conversion table created by executing a conversion table creating program in the another portable telephone; a conversion table storing means for storing the received conversion table; an electronic mail storingmeans for storing a created electronic mail; an encrypted electronic mail generating means for encrypting the electronic mail stored in the electronic mail storing means with reference to the conversion table stored in the conversion table storing means, to generate an encrypted electronic mail; an encrypted electronic mail sending means for sending the generated encrypted electronic mail; and a deleting means for deleting the electronic mail corresponding to the encrypted electronic mail from the electronic mail storing means after the encrypted electronic mail sending means sends the encypted electronic mail.

In order to achieve the object, the present invention provides a portable telephone usable medium having a portable telephone readable program code embodied therein for sending and receiving an electronic mail, the portable telephone readable program code comprising: a first portable telephone readable program code for causing the portable telephone to store a conversion table creating program; a second portable telephone readable program code for causing the portable telephone to execute the conversion table creating program to creat a conversion table upon an input from a owner; a third portable telephone readable program code for causing the portable telephone to store the created conversion table; a fourth portable telephone readable program code for causing the portable telephone to receive an encrypted electronic mail; a fifth portable telephone readable program code for causing the portable telephone to store the received encrypted electronic mail; a sixth portable telephone readable program code for causing the portable telephone to store a password; a seventh portable telephone readable program code for causing the portable telephone to input a password; an eighth portable telephone readable program code for causing the portable telephone to check whether or not a password input by the portable telephone coincides with the password stored in the portable telephone; a ninth portable telephone readable program code for causing the portable telephone to decrypt the received encrypted electronic mail with reference to the conversion table to generate a decrypted electronic mail, if the password input by the portable telephone coincides with the password stored in the portable telephone; a tenth portable telephone readable program code for causing the portable telephone to temporarily store the decrypted electronic mail; an eleventh portable telephone readable program code for causing the portable telephone to display the decrypted electronic mail; a twelfth portable telephone readable program code for causing the portable telephone to control the display of the decrypted electronic mail; and a thirteenth portable telephone readable program code for causing the portable telephone to delete the decrypted electronic mail according to an order for stopping displaying the decrypted electronic mail.

In order to achieve the object, the present invention provides a portable telephone usable medium having a portable telephone readable program code embodied therein for sending and receiving an electronic mail, the portable telephone readable program comprising: a first portable telephone readable program code for causing the portable telephone to receive from another portable telephone a conversion table created by executing a conversion table creating program in the another portable telephone; a second portable telephone readable program code for causing the portable telephone to store the received conversion table; a third portable telephone readable program code for causing the portable telephone to receive an encrypted electronic mail; a fourth portable telephone readable program code for causing the portable telephone to store the received encrypted electronic mail; a fifth portable telephone readable program code for causing the portable telephone to store a password; a sixth portable telephone readable program code for causing the portable telephone to input a password; a seventh portable telephone readable program code for causing the portable telephone to check whether or not a password input by the portable telephone coincides with the password stored in the portable telephone; an eighth portable telephone readable program code for causing the portable telephone to decrypt the received encrypted electronic mail with reference to the conversion table to generate a decrypted electronic mail, if the password input by the portable telephone coincides with the password stored in the portable telephone: a ninth portable telephone readable program code for causing the portable telephone to temporarily store the decrypted electronic mail; a tenth portable telephone readable program code for causing the portable telephone to display the decrypted electronic mail; an eleventh portable telephone readable program code for causing the portable telephone to control the display of the decrypted electronic mail; and a twelfth portable telephone readable program code for causing the portable telephone to delete the decrypted electronic mail according to an order for stopping displaying the decrypted electronic mail.

In order to achieve the object, the present invention provides a portable telephone usable medium having a portable telephone readable program code embodied therein for sending and receiving an electronic mail, the portable telephone readable program comprising: a first portable telephone readable program code for causing the portable telephone to store a conversion table creating program; a second portable telephone readable program code for causing the portable telephone to execute the conversion table creating program to creat a conversion table upon an input from a owner; a third portable telephone readable program code for causing the portable telephone to store the created conversion table; a fourth portable telephone readable program code for causing the portable telephone to store a created electronic mail; a fifth portable telephone readable program code for causing the portable telephone to encrypt the electronic mail with reference to the conversion table to generate an encrypted electronic mail; a sixth portable telephone readable program code for causing the portable telephone to send the generated encrypted electronic mail; and a seventh portable telephone readable program code for causing the portable telephone to delete the electronic mail corresponding to the encrypted electronic mail after sending the encypted electronic mail.

In order to achieve the object, the present invention provides a portable telephone usable medium having a portable telephone readable program code embodied therein for sending and receiving an electronic mail, the portable telephone readable program comprising: a first portable telephone readable program code for causing the portable telephone to receive from another portable telephone a conversion table created by executing a conversion table creating program in the another portable telephone; a second portable telephone readable program code for causing the portable telephone to store the received conversion table; a third portable telephone readable program code for causing the portable telephone to store a created electronic mail; a fourth portable telephone readable program code for causing the portable telephone to encrypt the electronic mail with reference to the conversion table to generate an encrypted electronic mail; a fifth portable telephone readable program code for causing the portable telephone to send the generated encrypted electronic mail; and a sixth portable telephone readable program code for causing the portable telephone to delete the electronic mail corresponding to the encrypted electronic mail after sending the encypted electronic mail.

### BRIEF DESCRIPTION OF THE DRAWINGS

FIG.1 is a perspective view of a portable telephone according to an exemplary embodiment of the present invention.
FIG.2 is a block diagram of an internal configuration of the portable telephone shown in FIG.1.
FIG. 3 is a flowchart of a conversion table creating process executed in the portable telephone according to the exemplary embodiment of the present invention.
FIG. 4 is an explanatory diagram of conversion tables (Katakana version) according to the exemplary embodiment of the present invention.
FIG. 5 is a flowchart of a conversion table transmitting process executed in the portable telephone according to the exemplary embodiment of the present invention.
FIG.6 is a flowchart of a conversion table receiving process executed in the portable telephone according to the exemplary embodiment of the present invention.
FIG. 7 is a flowchart of an encrypted mail sending process executed in the portable telephone according to the exemplary embodiment of the present invention.
FIG.8 is an explanatory diagram showing an address book according to the exemplary embodiment of the present invention.
FIG.9A is an explanatory diagram showing an electronic mail (Katakana version) displayed on a liquid crystal panel of the portable telephone according to the exemplary embodiment of the present invention.
FIG.9B is an explanatory diagram showing an encrypted electronic mail after encrypting the electronic mail (Katakana version) according to the exemplary embodiment of the present invention.
FIG.10 is a flowchart of an encrypted mail decrypting process executed in the portable telephone according to the exemplary embodiment of the present invention.
FIG.11A is an explanatory diagram showing an encrypted electronic mail (Katakana version) displayed on the liquid crystal panel of the portable telephone according to the exemplary embodiment of the present invention.
FIG.11B is an explanatory diagram showing a decrypted electronic mail after decrypting the encrypted electronic mail (Katakana version) according to the exemplary embodiment of the present invention.
FIG.12 is an explanatory diagram of conversion tables (Alphabet version) according to the exemplary embodiment of the present invention.
FIG.13A is an explanatory diagram showing an electronic mail (Alphabet version) displayed on the liquid crystal panel of the portable telephone according to the exemplary embodiment of the present invention.
FIG.13B is an explanatory diagram showing an encrypted electronic mail after encrypting the electronic mail (Alphabet version) according to the exemplary embodiment of the present invention.
FIG.14A is an explanatory diagram showing an encrypted electronic mail (Alphabet version) displayed on the liquid crystal panel of the portable telephone according to the exemplary embodiment of the present invention.
FIG.14B is an explanatory diagram showing a decrypted electronic mail after decrypting the encrypted electronic mail (Alphabet version) according to the exemplary embodiment of the present invention.

### DESCRIPTION OF THE PREFERRED EMBODIMENTS

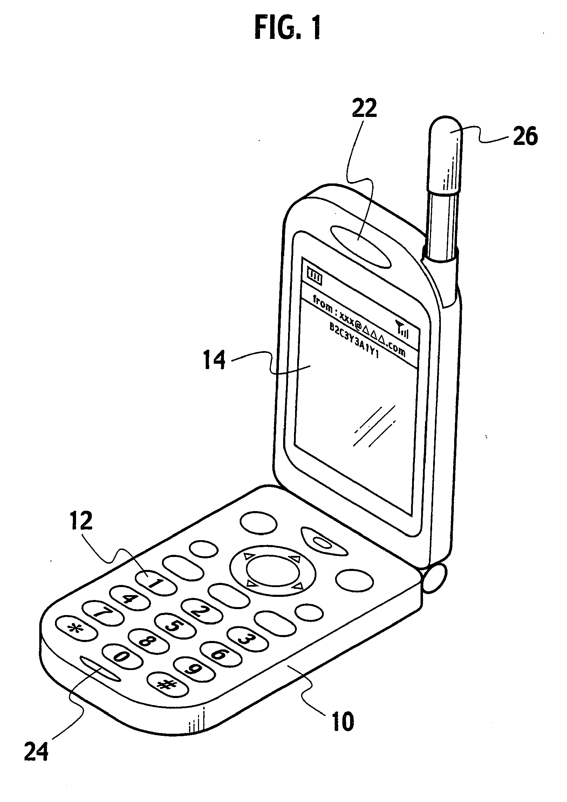

With reference to FIGS.1 to 14B, an exemplary embodiment of the present invention will be described below.

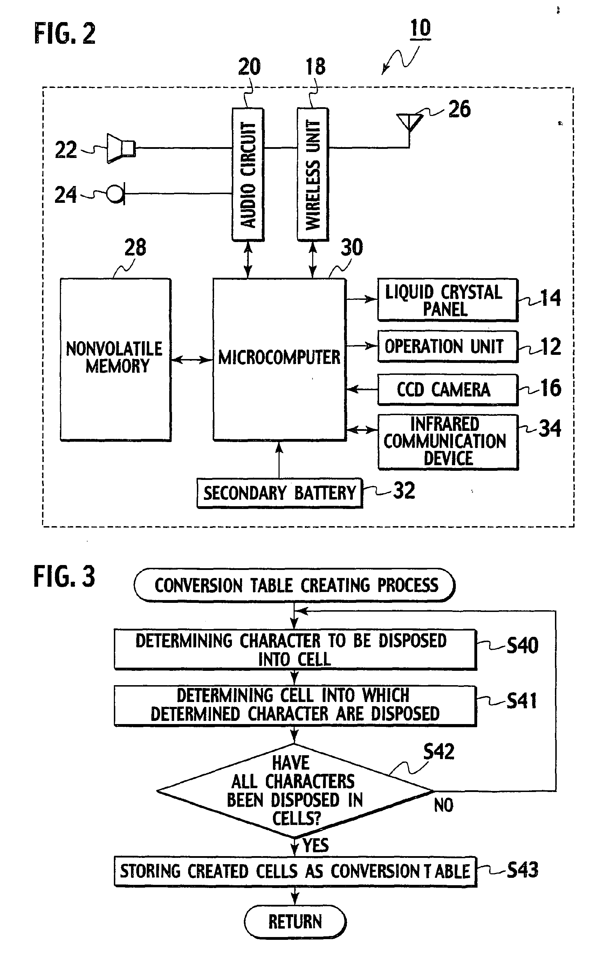

As shown in FIGS. 1 and 2, a portable telephone 10 comprises an operation unit 12, a liquid crystal panel 14, a CCD camera 16, a wireless unit 18, an audio circuit 20, a speaker 22, a microphone 24, a transmitting and receiving antenna 26, a nonvolatile memory 28, a microcomputer 30, a secondary battery 32 and an infrared communication device 34.

The wireless unit 18 is controlled by the microcomputer 30 and transmits or receives a radio wave to or from a base station through the transmitting and receiving antenna 26. The audio circuit 20 outputs to the speaker 22 through the microcomputer 30 a receiving signal output from the wireless unit 18 and outputs to the wireless unit 18 through the microcomputer 30 an audio signal output from the microphone 24 as a transmitting signal.

The speaker 22 converts into a sound the receiving signal output from the audio circuit 20 and outputs the sound to the outside of the portable telephone 10. The microphone 24 converts into the transmitting signal a sound produced by an operator and outputs the transmitting signal to the audio circuit 20. The CCD camera 16 captures an object on the portable telephone 10. The microcomputer 30 converts the captured object into image data and stores the image data in the nonvolatile memory 28.

The liquid crystal panel 14 displays characters input through the operation unit 12, images based on objects captured by the CCD camera 16 or a mail document and/or an image received through the transmitting and receiving antenna 26 thereon.

The secondary battery 32 supplies an electronic power into each circuit. The infrared communication device 34 communicates with another poratble telephone 10 via infrared rays. The microcomputer 30 consists of a CPU (central processing unit), a ROM (read only memory) and a RAM (random access memory) and executes an incoming and outgoing calls process, an electronic mail creating process, an electronic mail sending and receiving process, an Internet process and the like . The microcomputer 30 sends and receives an electronic mail or Internet-based data by using the wireless unit 18 and the transmitting and receiving antenna 26.

The nonvolatile memory 28 stores electronic mail data input through the operation unit 12, image data based on the objects captured by the CCD camera 16, electronic mail data received through the transmitting and receiving antenna 26 and various programs. Especially, the nonvolatile memory 28 stores an electronic mail sending and receiving program and a conversion table creating program. The microcomputer 30 executes the conversion table creating program to creat a conversion table. The conversion table is employed when the microcomputer 30 encrypts an electronic mail or decrypts an encrypted electronic mail. The nonvolatile memory 28 functions as an electronic mail storing means for storing an electronic mail. The nonvolatile memory 28 also functions as a conversion table creating program storing means for storing the conversion table creating program and a conversion table storingmeans for storing one or more created conversion tables.

The microcomputer 30 drives the infrared communication device 34 to transmit or receive a conversion table which is created according to the conversion table creating program.

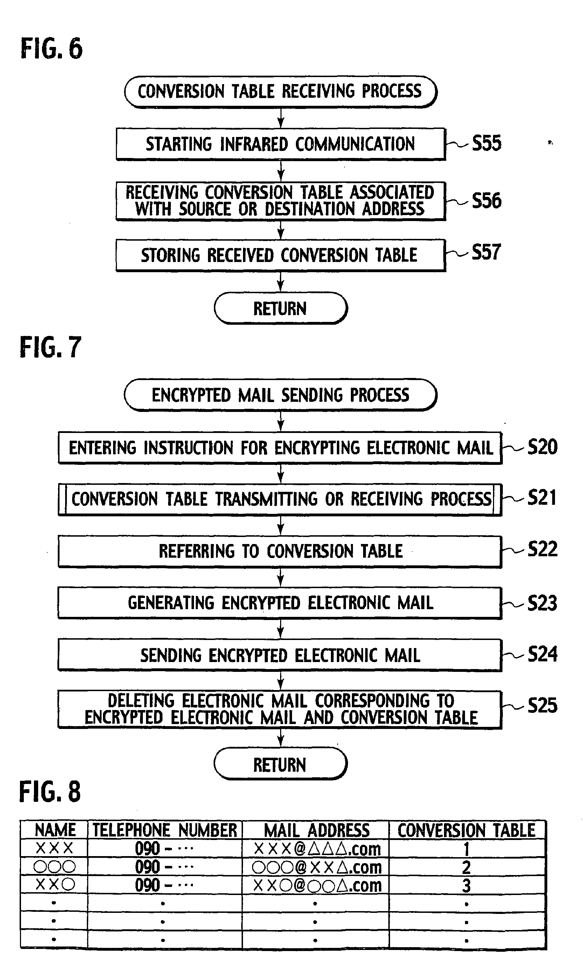

The nonvolatile memory 28 stores an address book. As shown in FIG. 8. names, telephone numbers, mail addresses and conversion table numbers are stored in the address book and are associated with one another. In the address book, each mail address is associated with only one conversion table. It is noted that different mail addresses may be associated with the same conversion table. The microcomputer 30 associates a created conversion table with one or more mail addresses by accepting input from the operation unit 12.

The microcomputer 30 encrypts an electronic mail created by an owner of the portable telephone 10 to generate an encrypted electronic mail. At this time, the microcomputer 30 generates the encrypted electronic mail with reference to the conversion table associated with a source or destination mail address of the created electronic mail. Then, the microcomputer 30 sends the generated encrypted electronic mail.

The nonvolatile memory 28 functions as a password storing means and previously stores a password therein. The password can be registered and changed by only the owner. The microcomputer 30 requires an input of the password to a user when receiving the encrypted electronic mail through the transmitting and receiving antenna 26. If the input password coincides with the previously stored password, the microcomputer 30 decryptes the received encrypted electronic mail with reference to the conversion table corresponding to a source or destination mail address of the received encrypted electronic mail to generate a decrypted electronic mail. Then, the microcomputer 30 stores the decrypted electronic mail in the RAM which functions as a decrypted electronic mail temporarily storing means.

The microcomputer 30 displays the decrypted electronic mail on the liquid crystal panel 14. Also, the microcomputer 30 deletes the stored decrypted electronic mail from the RAM when receiving an instruction for finishing the display.

The microcomputer 30 functions as the following means: the conversion table creating means for ceating a conversion table by reading and executing the convesion table creating program stored in the nonvolatile memory 28 accroding to inputting from the operation unit 12; a conversion table receiving means for receiving a conversion table from another portable telephone 10: a receiving means for receiving an encrypted electronic mail by reading and executing the electronic mail sending and receiving program stored in the nonvolatile memory 28; a checking means for checking whether or not a password input from the operation unit 12 coincides with the password registered in the nonvolatile memory 28; a decrypted electronic mail generating means for decrypting the received encrypted electronic mail to generate a decrypted electronic mail with reference to a conversion table if the password input from the operation unit 12 coincides with the password registered in the nonvolatile memory 28; a display control means for displaying the decrypted electronic mail stored in the RAM on the liquid crystal panel 14; and a decrypted electronic mail deleting means for deleting the decrypted electronic mail stored in the RAM according to the reception of the instruction for finishing the display of the decrypted electronic mail from the operation unit 12.

The microcomputer 30 further functions as the following means: the conversion table storing means for receiving a conversion table from another portable telephone 10 and storing the conversion table in the nonvolatile memory 28; an encrypted electronic mail generating means for encrypting an electronic mail to generate an encrypted electronic mail with reference to a conversion table stored in the nonvolatile memory 28 by reading and executing the electronic mail sending and receiving program stored in the nonvolatile memory 28; an encrypted electronic mail sending means for sending the encrypted electronic mail; and a deletingmeans for deleting the electronic mail corresponding to the encrypted electronic mail from the nonvolatile memory 28 after sending the encrypted electronic mail.

Next, a conversion table creating process executed in the portable telephone 10 will be described with reference to FIG. 3.

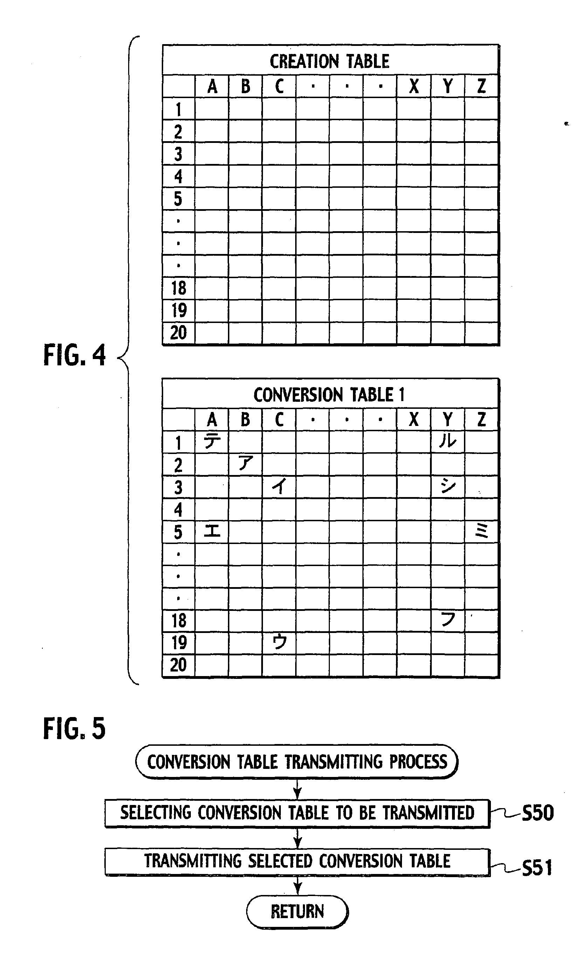

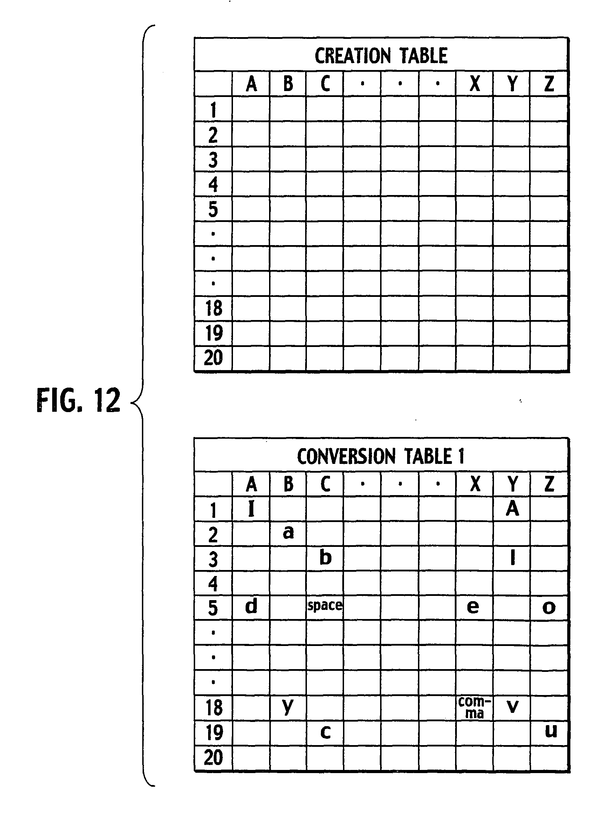

As shown in FIGS.4 or 12, a creation table of Katakana version or Alphabet version is formed by a plurality of cells each which is identified by a combination of one of alphabets A to Z and one of numerals 1 to 20.

In step S40 , the microcomputer 30 determines a character to be displosed into a ceratin cell of the creation table according to operation input from the operation unit 12. For example, when the operation unit 12 inputs Katakana " 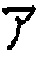 (A)", the microcomputer 30 determines " 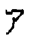 (A) "as the character to be disposed into a certain cell of the creation table. Also, when the operation unit 12 inputs Alphabet "A", the microcomputer 30 determines "A" as the character to be disposed into a certain cell of the creation table.

In step S41, the microcomputer 30 determines a cell into which the determined character is disposed according to operation input from the operation unit 12. For example, when the operation unit 12 inputs "B2", the microcomputer 30 determines "B2" as the cell into which the determined character " 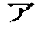 (A)" is disposed. Then, the microcomputer 30 enters Katakana " 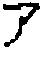 (A)" into the cell "B2" on the creation table (see FIG.4). Also, when the operation unit 12 inputs "Y1", the microcomputer 30 determines "Y1" as the cell into which the determined character "A" is disposed. Then, the microcomputer 30 enters Alphabet "A" into the cell "Y1" on the creation table (see FIG.12).

In step S42, the microcomputer 30 determines whether or not all characters (e.g. Katakana " 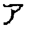 (A)" to " 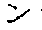 (N)" used in Japanese writing or Alphabet "A" to "Z" and "a" to "z" , a space, a comma, a colon, a question mark, an exclamation mark and the like used in English writing) have been disposed into cells on the creation table. If all characters have not been disposed, the process returns to step S40. If all characters have been disposed, the process proceeds to step S43.

In step S43, the microcomputer 30 stores the created creation table on which all characters have been disposed into the cells in the nonvolatile memory 28 as a conversion table. At this time, the microcomputer 30 assigns identification information (e.g. a conversion table number) to the stored conversion table. Then, this process is finished. In steps S40 to 43, the microcomputer 30 functions as the conversion table creating means for creating a conversion table.

Although the exemplary embodiment is described on the assumption that there are cells into which characters are not disposed, the characters may be displosed into all cells of the creation table.

In a case where Katakana " 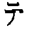 (TE)" is described in a main body of the electronic mail to be encrypted, the microcomputer 30 refers to the conversion talbe 1 shown in FIG. 4 to change Katakana " 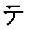 (TE)" into 'A1" because Katakana *"* 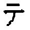 (TE)" is disposed into the cell "A1" of the conversion table 1. Also, in a case where Alphabet "I" is described in a main body of the electronic mail to be encrypted, the microcomputer 30 refers to the conversion table 1 shown in FIG. 12 to change Alphabet "I" into "A1" because Alphabet "I" is disposed into the cell "A1" of the conversion table 1.

In contrast, in a case where "A1" is described in a main bocy of the encrypted electronic mail to be decrypted, the microcomputer 30 refers to the conversion table 1 shown in FIG. 4 to change "A1" into Katakana " 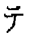 (TE)". Also, in a case where "A1" is described in a main body of the encrypted electronic mail to be decrypted, the microcomputer 30 refers to the conversion table 1 shown in FIG. 12 to change "A1" into Alphabet "I".

Although the exemplary embodiment is described on the assumption that the electronic mail sending and receiving program is previously stored (pre-installed) in the portable telephone 10, the electronic mail sending and receiving program may be stored in the outside (e.g. a server) of the portable telephone 10 and be downloaded before the encrypted electronic mail is sent or received.

Next, a conversion table transmitting process will be described with reference to FIG.5.

In step S50, the microcomputer 30 decides a conversion table to be transmitted to another portable telephone 10 from among one or more conversion tables stored in the nonvolatile memory 28 accroding to the operation input from the operation unit 12.

In step S51, the microcomputer 30 drives the infrared communication device 34 and transmits the decided conversion table to another portable telephone 10 via the infrared communication device 34 according to the operation input from the operation unit 12. Thereby, the portable telephone 10 shares one conversion table with another portable telephone 10.

Next, a conversion table receiving process will be described with reference to FIG.6.

In step S55, the microcomputer 30 drives the infrared communication device 34 according to the operation input from the operaion unit 12 and starts the infrared communication so as to receive a conversion table from another portable telephone 10.

In step S56, the microcomputer 30 receives the conversion table from another portable telephone 10 via the infrared communication device 34. In step S56, the microcomputer 30 functions as the conversion table receiving means for receiving a conversion table from another portable telephone 10.

In step S57, the microcomputer 30 stores the received conversion table in the nonvolatile memory 28 and finishes this process. Thereby, the portable telephone 10 shares one conversion table with another portable telephone 10.

Next, an encrypted mail sending process will be described with reference to FIG. 7. The encrypted mail sending process is executed after an electronic mail is created and source and destination addresses are written in the created electronic mail. The created electronic mail is stored in the nonvolatile memory 28.

In step S20, the microcomputer 30 receives the instruction for encrypting an electronic mail from the operation unit 12. In step S21, the microcomputer 30 executes the conversion table transmitting or receiving process. In step S22, the microcomputer 30 refers to a conversion table corresponding to a source or destination address based on the address book stored in the nonvolatile memory 28.

In step S23, the microcomputer 30 generates an encrypted electronic mail based on the referred conversion table. In steps S22 and S23, the microcomputer 30 functions as the encrypted electronic mail generating means for encrypting an electronic mail by referring to a conversion table to generate an encrypted electronic mail.

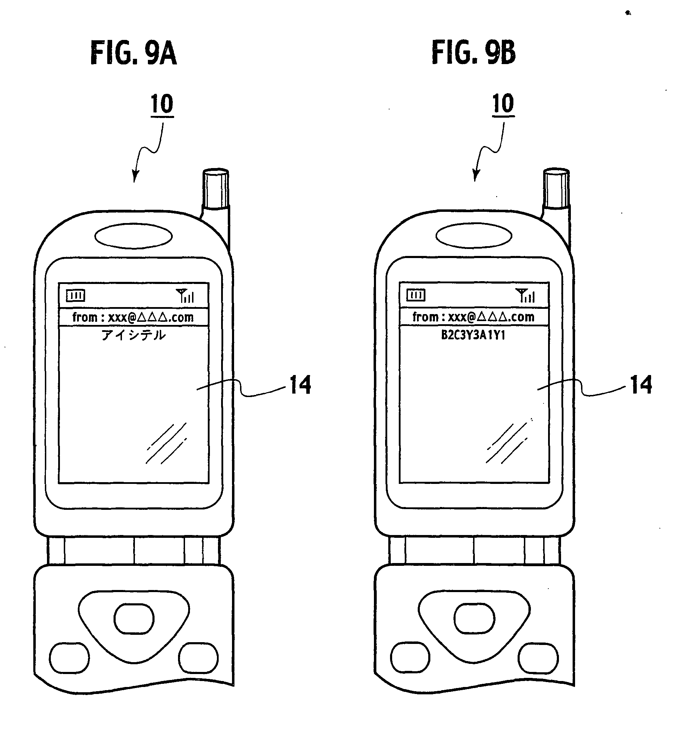

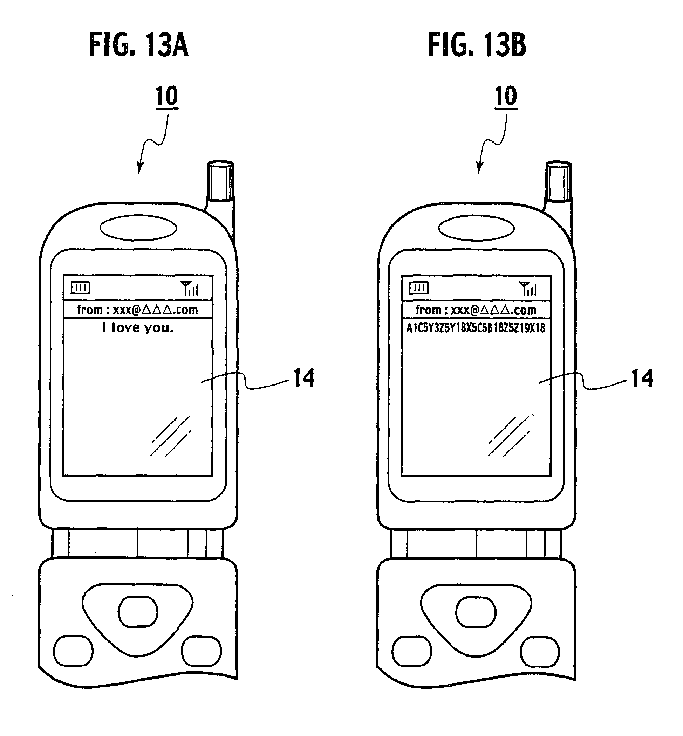

For example, if the microcomputer 30 receives the instruction for encrypting the electronic mail shown in FIG. 9A (or FIG.13A), the microcomputer 30 executes steps S21 to S23 to generate the encrypted electronic mail shown in FIG.9B (or FIG.13B).

In step S24, the microcomputer 30 sends the encrypted electronic mail to a destination address. In step S24, the microcomputer 30 functions as the encrypted electronic mail sending means for sending an encrypted electronic mail.

In step S25, the microcomputer 30 deletes the electronic mail corresponding to the sent encrypted electronic mail from the nonvolatile memory 28 and then finishes this process. In step S25, the microcomputer 30 functions as the deleting means for deleting an electronic mail corresponding to the sent encrypted electronic mail from the nonvolatile memory 28.

It is noted that the electronic mail corresponding to the encrypted electronic mailmaybe stored in the nonvolatile memory 28 without being deleted. In a case where the microcomputer 30 continues to store the encrypted electronic mail in the nonvolatile memory 28, only an owner of the portable telephone 10 checks the contents of the sent electronic mail because it is encrypted. On the other hand, in a case where the electronic mail corresponding to the encrypted electronic mail is deleted, this certainly prevents a third party from reading the contents of the sent electronic mail.

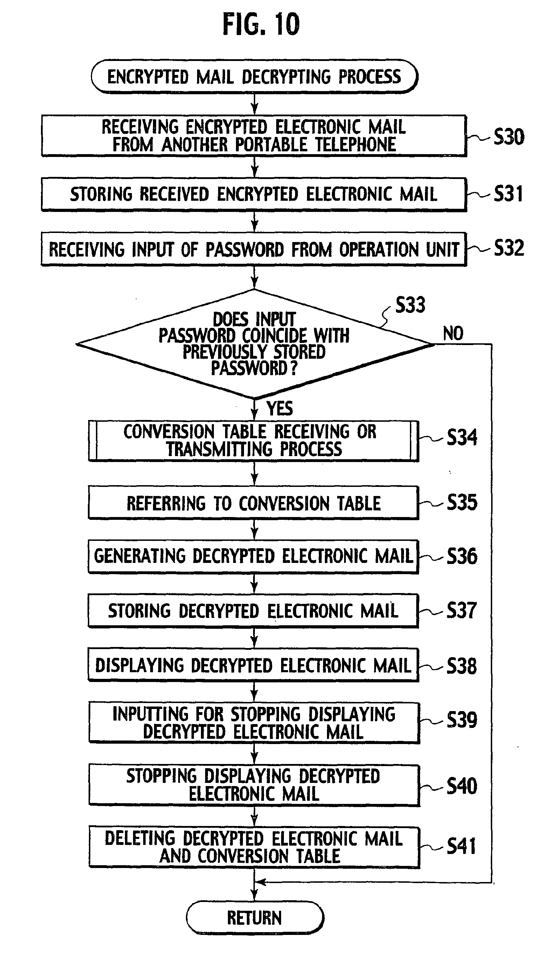

Next, an encrypted mail decrypting process will be described with reference to FIG.10.

In step S30, the microcomputer 30 receives an encrypted electronic mail from another portable telephone 10. In step S30, the microcomputer 30 functions as an encrypted electronic mail receiving means for receiving an encrypted electronic mail.

In step S31, the microcomputer 30 stores the received encrypted electronic mail in the nonvolatile memory 28. The nonvolatile memory 28 functions as an encrypted electronic mail storing means for storing the received encrypted electronic mail.

In step S32, the microcomputer 30 receives the input of a password from the operation unit 12 which functions as a password input means. In step S33 , the microcomputer 30 checks whether or not the input password coincides with the password previously stored in the nonvolatile memory 28. If the input password coincides with the previously stored password, the process proceeds to step S34. If the input password does not coincide with the previously stored password, the process is finished. In step S33, the microcomputer 30 functions as the checking means for checking whether or not a password input from the operation unit 12 coicides with a password previously stored in the nonvolatile memory 28.

In step S34, the microcomputer 30 executes the conversion table receiving or transmitting process. In step 35, the microcomputer 30 refers to a conversion table corresponding to a source or destination address based on the address book stored in the nonvolatile memory 28. In step S36, the microcomputer 30 generates a decrypted electronic mail based on the referred conversion table. In steps S35 and S36, the microcomputer 30 functions as the decrypted electronic mail generating means for decrypting an encrypted electronic mail stored in the nonvolatile memory 28 by referring to a conversion table to generate a decrypted electronic mail.

In step S37, the microcomputer 30 stores the generated decrypted electronic mail in the RAM which functions as a decrypted electronic mail temporarily storing means for temporarily storing a decrypted electronic mail.

In step S38, the microcomputer 30 displays the decrypted electronic mail stored in the RAM on the liquid crystal panel 14. In step S38 , the microcomputer 30 functions as the display control means for controlling the display of a decrypted electronic mail on the liquid cystal panel 14.

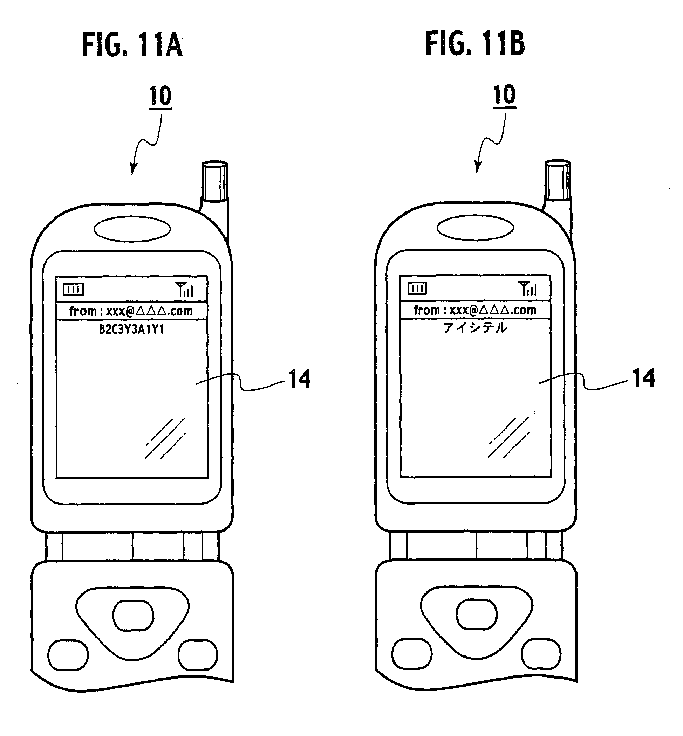

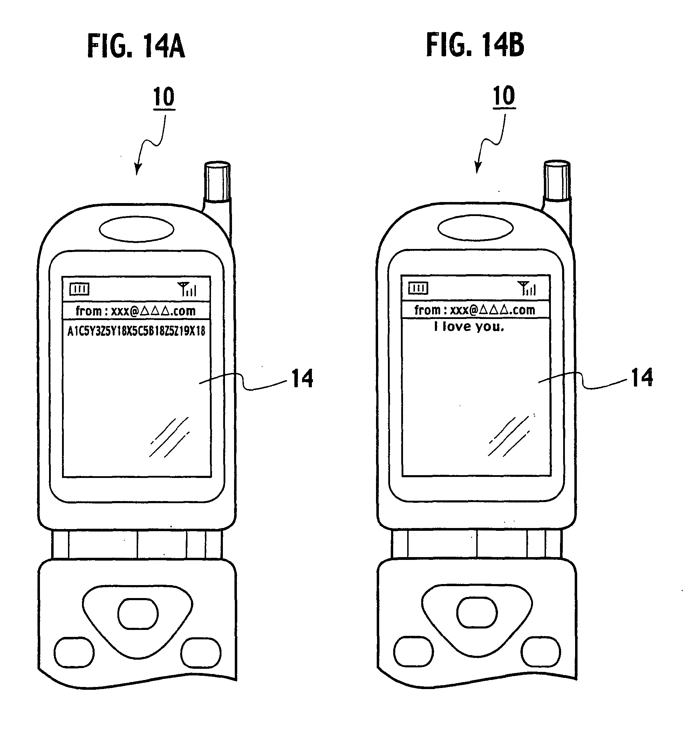

For example, if the microcomputer 30 receives an encrypted electronic mail shown in FIG.11A (or FIG.14A), the microcomputer 30 executes steps S31 to S37 and displays a decrypted electronic mail shown in FIG.11B (or FIG.14B) on the liquid crystal panel 14 in step S38.

In step S39, the microcomputer 30 receives the input for stopping displaying the decrypted electronic mail from the operation unit 12. In step S40, the microcomputer 30 stops displaying the decrypted electronic mail. In step S41, the microcomputer 30 deletes the decrypted electronic mail stored in the RAM and then finishes this process. In step S40, the microcomputer 30 functions as the decrypted electronic mail deleting means for deleting a decrypted electronic mail stored in the RAM according to a reception of input for stopping displaying the decrypted electronic mail. The microcomputer 30 may delete the received encrypted electronic mail corresponding to the decrypted electronic mail from the nonvolatile memory 28 in step S41.

Next, advantageous features of the portable telephone 10 and the program for sending and receiving an electronic mail according to the poresent invention will be described.

The received encrypted electronic mail is decrypted with reference to the conversion talbe only when a password input from the operation unit 12 coincides with a password previously stored in the nonvolatile memory 28. This prevents a third party who does not know the password of the owner of the portable telephone 10 from reading the decrypted electronic mail.

The received encrypted electronic mail is correctly decrypted only when a receiver and a sender shares the same conversion table. This prevents a third party who does not share a conversion table used by a sender to encrypt a created electronic mail from reading the decrypted electronic mail. Also, a receiver can easily know that the encrypted electronic mail is sent from a third party who does not share a conversion talbe with the receiver when the received encrypted electronic mail is not correctly decrypted. This allows a receiver to easily check whether or not a received electronic mail is sent from an authorized person without adding a new specifying field to the electronic mail.

Even if a sender sends a created electronic mail to a wrong person, the wrong person can not know the contents of the electronic mail because he/she does not share a conversion talbe with the sender.

If the portable telephone 10 receives a non-encrypted electronic mail, the portable telephone 10 may allow a user to read the non-encrypted electronic mail without inputting a password. This achieves a good balance between secrecy and convenience.

The conversion table is created according to the conversion table creating program in owner's portable telephone 10 or another portable telephone 10. This reduces a possibility that a conversion table that one owner creats (or a conversion table transmitted from one owner) coincides with a conversion table that another owner creats.

In a case where a portable telephone previously stores a plurality of conversion tables therein and selects one conversion table from among the plulrality of conversion tables in order, if a third party knows the order, he/she can easily decrypt an encrypted electronic mail. However, the portable telephone 10 does not previously store conversion tables. This reduces a possibility that the third party easily decrypts the encrypted electronic mail.

If lovers share one conversion table, the strength of their intimacy increases.

Even if a sender sends an encrypted electronic mail to a wrong person who has the same conversion table creating program as the sender has, the wrong person can not decrypt the received encrypted electronic mail because only two or more owners who plan to exchange an electronic mail share one conversion table employed when the encrypted electronic mail is generated. This reduces a possibility that the wrong person decrypts the received encrypted electronic mail.

Next, modified embodiments of the present invention will be described.

Although the exemplary embodiment is described on the assumption that the portable telephone 10 stores a plurality of conversion tables in the nonvolatile memory 28, the portable telephone 10 may store one conversion table in the nonvolatile memory 28.

Although the exemplary embodiment is described on the assumption that the conversion table is shared between a sender and a receiver just before an electronic mail is encrypted or an encrypted electronic mail is decrypted, the conversion table may be previously shared between the sender and the receiver by carrying out the conversion table receiving or transmitting process. In this case, the sender and the receiver can exchange an encrypted electronic mail each other out of an infrared communication area.

The nonvolatile memory 28 may be a removable memory.

Although the exemplary embodiment is described on the assumption that the decrypted electronic mail temporarily storing means is the RAM, the exemplary embodiment is not limitative in this regard.

Although the exemplary embodiment is described on the assumption that the portable telephone 10 creates a conversion table shown in FIG.4 according to the conversion table creating program, the exemplary embodiment is not limitative in this regard.

Theportable telephone 10 may store a plurality of passwords therein. In this case, the portable telephone 10 requires a user to input one password according to a sender name, a receiver name, a sending time, a receiving time and/or a current time. For example, the user can use a one time password generator to input one time password (OTP) into the portable telephone 10. In this case, the one time password generator has been previously synchronized with the portable telephone 10.

The present exemplary embodiment is to be considered in all respects as illustrative and not restrictive. The present invention may be therefore embodied in other specific forms without departing from the essential characteristics thereof.

## Claims

1. A portable telephone (10) comprising:
a conversion table creating program storing means (28) for storing a conversion table creating program;
a conversion table creating means (30) for executing the conversion table creating program to creat a conversion table upon an input from a owner:
a conversion table storing means (28) for storing the created conversion table;
an encrypted electronic mail receiving means (30) for receiving an encrypted electronic mail;
an encrypted electronic mail storing means (28) for storing the received encrypted electronic mail:
a password storing means (28) for storing a password:
a password inputting means (12) for inputting a password;
a ckecing means (30) for checking whether or not a password input from the password inputting means (12) coincides with the password stored in the password storing means (28);
a decrypted electronic mail generating means (30) for decrypting the received encrypted electronic mail stored in the encrypted electronic mail storing means (28), with reference to the conversion table stored in the conversion table storing means (28), to generate a decrypted electronic mail, if the password input from the password inputting means (12) coincides with the password stored in the password storing means (28);
a decrypted electronic mail temporarily storing means (30) for temporarily storing the decrypted electronic mail generated by the decrypted electronic mail generating means (30):
a display means (14) for displaying the decrypted electronic mail thereon;
a display conrol means (30) for controlling the display of the decrypted electronic mail temporarily stored in the decrypted electronic mail temporarily storing means (30) on the display means (14): and
a decrypted electronic mail deleting means (30) for deleting the decrypted electronic mail temporarily stored in the decrypted electronic mail temporarily storing means (30) according to an order for stopping displaying the decrypted electronic mail on the display means (14).

2. A portable telephone (10) comprising:
a conversion table receiving means (30) for receiving from another portable telephone (10) a conversion table created by executing a conversion table creating program in the another portable telephone (10);
a conversion table storing means (28) for storing the received conversion table;
an encrypted electronic mail receiving means (30) for receiving an encrypted electronic mail;
an encrypted electronic mail storing means (28) for storing the received encrypted electronic mail;
a password storing means (28) for storing a password;
a password inputting means (12) for inputting a password;
a ckecing means (30) for checking whether or not a password input from the password inputting means (12) coincides with the password stored in the password storing means (28);
a decrypted electronic mail generating means (30) for decrypting the received encrypted electronic mail stored in the encrypted electronic mail storing means (28), with reference to the conversion table stored in the conversion table storing means (28), to generate a decrypted electronic mail, if the password input from the password inputting means (12) coincides with the password stored in the password storing means (28);
a decrypted electronic mail temporarily storing means(30) for temporarily storing the decrypted electronic mail generated by the decrypted electronic mail generating means (30);
a display means (14) for displaying the decrypted electronic mail thereon;
a display conrol means (30) for controlling the display of the decrypted electronic mail temporarily stored in the decrypted electronic mail temporarily storing means (30) on the display means (14); and
a decrypted electronic mail deleting means (30) for deleting the decrypted electronic mail temporarily stored in the decrypted electronic mail temporarily storing means (30) according to an order for stopping displaying the decrypted electronic mail on the display means (14).

3. A portable telephone (10) comprising:
a conversion table creating program storing means (28) for storing a conversion table creating program:
a conversion table creating means (30) for executing the conversion table creating program to creat a conversion table upon an input from a owner;
a conversion table storing means (28) for storing the created conversion table;
an electronic mail storing means (28) for storing a created electronic mail;
an encrypted electronic mail generating means (30) for encrypting the electronic mail stored in the electronic mail storing means (28) with reference to the conversion table stored in the conversion table storing means (28), to generate an encrypted electronic mail;
an encrypted electronic mail sending means (30) for sending the generated encrypted electronic mail; and
a deleting means (30) for deleting the electronic mail corresponding to the encrypted electronic mail from the electronic mail storing means (28) after the encrypted electronic mail sendingmeans (30) sends the encypted electronic mail.

4. A portable telephone (10) comprising:
a conversion table receiving means (30) for receiving from another portable telephone (10) a conversion table created by executing a conversion table creating program in the another portable telephone (10);
a conversion table storing means (28) for storing the received conversion table;
an electronic mail storing means (28) for storing a created electronic mail;
an encrypted electronic mail generating means (30) for encrypting the electronic mail stored in the electronic mail storing means (28) with reference to the conversion table stored in the conversion table storing means (28), to generate an encrypted electronic mail;
an encrypted electronic mail sending means (30) for sending the generated encrypted electronic mail; and
a deleting means (30) for deleting the electronic mail corresponding to the encrypted electronic mail from the electronic mail storing means (28) after the encrypted electronic mail sending means (30) sends the encypted electronic mail.

5. The portable telephone (10) according to claim 3 or 4, wherein
the conversion table storing means (28) stores a plurality of conversion tables; and
the encrypted electronic mail generating means (30) encrypts the electronic mail stored in the electronic mail storing means (28), with reference to a conversion table corresponding to a destination address which is selected from among the plurality of conversion tables stored in the conversion table storing means (28), to generate the encrypted electronic mail.

6. A portable telephone usable medium (28) having a portable telephone readable program code embodied therein for sending and receiving an electronic mail, the portable telephone readable program code comprising:
a first portable telephone readable program code for causing the portable telephone (10) to store a conversion table creating program;
a second portable telephone readable program code for causing the portable telephone (10) to execute the conversion table creating program to creat a conversion table upon an input from a owner;
a third portable telephone readable program code for causing the portable telephone (10) to store the created conversion table;
a fourth portable telephone readable program code for causing the portable telephone (10) to receive an encrypted electronic mail;
a fifth portable telephone readable program code for causing the portable telephone (10) to store the received encrypted electronic mail;
a sixth portable telephone readable program code for causing the portable telephone (10) to store a password;
a seventh portable telephone readable program code for causing the portable telephone (10) to input a password;
an eighth portable telephone readable program code for causing the portable telephone to check whether or not a password input by the portable telephone (10) coincides with the password stored in the portable telephone (10);
a ninth portable telephone readable program code for causing the portable telephone (10) to decrypt the received encrypted electronicmail with reference to the conversion table to generate a decrypted electronic mail, if the password input by the portable telephone (10) coincides with the password stored in the portable telephone (10);
a tenth portable telephone readable program code for causing the portable telephone (10) to temporarily store the decrypted electronic mail;
an eleventh portable telephone readable program code for causing the portable telephone (10) to display the decrypted electronic mail;
a twelfth portable telephone readable program code for causing the portable telephone (10) to control the display of the decrypted electronic mail; and
a thirteenth portable telephone readable program code for causing the portable telephone (10) to delete the decrypted electronic mail according to an order for stopping displaying the decrypted electronic mail.

7. A portable telephone usable medium (28) having a portable telephone readable program code embodied therein for sending and receiving an electronic mail, the portable telephone readable program comprising:
a first portable telephone readable program code for causing the portable telephone (10) to receive from another portable telephone (10) a conversion table created by executing a conversion table creating program in the another portable telephone (10);
a second portable telephone readable program code for causing the portable telephone (10) to store the received conversion table;
a third portable telephone readable program code for causing the portable telephone (10) to receive an encrypted electronic mail;
a fourth portable telephone readable program code for causing the portable telephone (10) to store the received encrypted electronic mail;
a fifth portable telephone readable program code for causing the portable telephone (10) to store a password;
a sixth portable telephone readable program code for causing the portable telephone (10) to input a password;
a seventh portable telephone readable program code for causing the portable telephone (10) to check whether or not a password input by the portable telephone (10) coincides with the password stored in the portable telephone (10);
an eighth portable telephone readable program code for causing the portable telephone (10) to decrypt the received encrypted electronic mail with reference to the conversion table to generate a decrypted electronic mail, if the password input by the portable telephone (10) coincides with the password stored in the portable telephone (10);
a ninth portable telephone readable program code for causing the portable telephone (10) to temporarily store the decrypted electronic mail;
a tenth portable telephone readable program code for causing the portable telephone (10) to display the decrypted electronic mail;
an eleventh portable telephone readable program code for causing the portable telephone (10) to control the display of the decrypted electronic mail; and
a twelfth portable telephone readable program code for causing the portable telephone (10) to delete the decrypted electronic mail according to an order for stopping displaying the decrypted electronic mail.

8. A portable telephone usable medium (28) having a portable telephone readable program code embodied therein for sending and receiving an electronic mail, the portable telephone readable program comprising:
a first portable telephone readable program code for causing the portable telephone (10) to store a conversion table creating program;
a second portable telephone readable program code for causing the portable telephone (10) to execute the conversion table creating program to creat a conversion table upon an input from a owner;
a third portable telephone readable program code for causing the portable telephone (10) to store the created conversion table:
a fourth portable telephone readable program code for causing the portable telephone (10) to store a created electronic mail;
a fifth portable telephone readable program code for causing the portable telephone (10) to encrypt the electronic mail with reference to the conversion table to generate an encrypted electronic mail;
a sixth portable telephone readable program code for causing the portable telephone (10) to send the generated encrypted electronic mail; and
a seventh portable telephone readable program code for causing the portable telephone (10) to delete the electronic mail corresponding to the encrypted electronic mail after sending the encypted electronic mail.

9. A portable telephone usable medium (28) having a portable telephone readable program code embodied therein for sending and receiving an electronic mail, the portable telephone readable program comprising:
a first portable telephone readable program code for causing the portable telephone (10) to receive from another portable telephone (10) a conversion table created by executing a conversion table creating program in the another portable telephone (10);
a second portable telephone readable program code for causing the portable telephone (10) to store the received conversion table;
a third portable telephone readable program code for causing the portable telephone (10) to store a created electronic mail;
a fourth portable telephone readable program code for causing the portable telephone (10) to encrypt the electronic mail with reference to the conversion table to generate an encrypted electronic mail;
a fifth portable telephone readable program code for causing the portable telephone (10) to send the generated encrypted electronic mail; and
a sixth portable telephone readable program code for causing the portable telephone (10) to delete the electronic mail corresponding to the encrypted electronic mail after sending the encypted electronic mail.

10. The portable telephone usable medium (28) according to claim 8, the portable telephone readable program further comprising:
an eighth portable telephone readable program code for causing the portable telephone (10) to store a plurality of conversion tables; and
a ninth portable telephone readable program code for causing the portable telephone (10) to encrypt the electronic mail, with reference to a conversion table corresponding to a destination address which is selected from among the plurality of conversion tables, to generate the encrypted electronic mail.

11. The portable telephone usable medium (28) according to claim 9, the portable telephone readable program further comprising:
a seventh portable telephone readable program code for causing the portable telephone (10) to store a plurality of conversion tables; and
an eighth portable telephone readable program code for causing the portable telephone (10) to encrypt the electronic mail, with reference to a conversion table corresponding to a destination address which is selected from among the plurality of conversion tables , to generate the encrypted electronic mail.
